(19) Europäisches Patentamt
European Patent Office
Office européen des brevets

(11) **EP 4 001 697 B1**

(12) **EUROPEAN PATENT SPECIFICATION**

(45) Date of publication and mention
of the grant of the patent:
**16.07.2025 Bulletin 2025/29**

(21) Application number: **20207821.8**

(22) Date of filing: **16.11.2020**

(51) International Patent Classification (IPC):
$F16H\ 39/02^{(2006.01)}$    $F16H\ 61/40^{(2010.01)}$
$F16H\ 61/423^{(2010.01)}$    $F16H\ 61/433^{(2010.01)}$
$F16H\ 61/42^{(2010.01)}$    $F16H\ 61/4157^{(2010.01)}$

(52) Cooperative Patent Classification (CPC):
**F16H 39/02; F16H 61/4157; F16H 61/423;
F16H 61/433; F16H 61/478;** F16H 2059/366;
F16H 2059/6861; F16H 2059/6869;
F16H 2059/6876

(54) **HYDROSTATIC TRANSMISSION**

HYDROSTATISCHE ÜBERTRAGUNG

TRANSMISSION HYDROSTATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.05.2022 Bulletin 2022/21**

(73) Proprietor: **Danfoss Power Solutions ApS
6430 Nordborg (DK)**

(72) Inventor: **RODRIGUEZ CARMUEGA, Victor
6430 Nordborg (DK)**

(74) Representative: **Keil & Schaafhausen
Patentanwälte PartGmbB
Bockenheimer Landstraße 25
60325 Frankfurt am Main (DE)**

(56) References cited:
**EP-A1- 3 623 664**     **EP-A2- 1 433 648**
**DE-A1- 102016 205 891**    **US-A1- 2010 083 652**
**US-B1- 8 491 444**

**Description**

The present invention relates to a hydrostatic transmission having an engine, a first hydraulic unit, a second hydraulic unit, and a drive unit, which are connected to the control unit having a memory unit, wherein

the engine comprises a first speed sensor and is connected to the first hydraulic unit, wherein the drive unit is connected to the second hydraulic unit, wherein the first hydraulic unit is a pump and the second hydraulic unit is a motor or the first hydraulic unit is a motor and the second hydraulic unit is a pump, wherein

each hydraulic unit comprises a sensor unit having a speed sensor, wherein

the first and the second hydraulic unit are connected through a first fluid connection and a second fluid connection, wherein the first fluid connection comprises a first fluid connection sensor unit and the second fluid connection comprises a second fluid connection sensor unit.

Further the present disclosure relates to a method to control the characteristics of a hydrostatic transmission described above.

EP 3 623 664 A1 solely describes a control unit which controls a displacement of the hydraulic units based on a set point, operator commands and sensor outputs.

EP 1 433 648 A2 describes a controller which determines the displacement solely on the operator's control commands, speed sensor outputs, pressure sensor outputs.

US 8 491 444 B1 describes a transmission control system. This transmission control system determines an output torque based on sensor outputs relating to US 8 491 444 B1 describes a transmission control system. This transmission control system determines an output torque based on sensor outputs relating to operating characteristics of the transmission, the power source and/or parasitic loads. Further, a speed signal, pressure signals and information provided on storage components are used to determine the output torque. These information are processed by a controller.

US 2010 0083652 A2 describes a controller which comprises a decision portion, which takes as input the current direction of travel, of the shift lever detected by the shift position sensor, as well as the pressures of pressurized oil on the sides of the ports of the hydraulic pump detected by the pressure sensors.

DE 10 2016 205891 A1 describes a hydrostatic traction drive and a vehicle with such a hydrostatic traction drive.

Known hydrostatic transmissions, as used for example in mining vehicles, construction site equipment or other machines, comprise two hydraulic units, an engine and a drive unit. Two hydraulic units are connected fluidly to each other and are a pump and a motor working either as a pump or a motor depending on the machine state (acceleration-constant speed-deceleration). A displacement of the hydraulic units is adjustable. The first hydraulic unit is connected to the engine, which can be combustion engine, electrical engine or the like. The second operating characteristics of the transmission, the power source and/or parasitic loads. Further, a speed signal, pressure signals and information provided on storage components are used to determine the output torque. These information are processed by a controller.

US 2010 0083652 A2 describes a controller which comprises a decision portion, which takes as input the current direction of travel, of the shift lever detected by the shift position sensor, as well as the pressures of pressurized oil on the sides of the ports of the hydraulic pump detected by the pressure sensors.

DE 10 2016 205891 A1 describes a hydrostatic traction drive and a vehicle with such a hydrostatic traction drive.

Known hydrostatic transmissions, as used for example in mining vehicles, construction site equipment or other machines, comprise two hydraulic units, an engine and a drive unit. Two hydraulic units are connected fluidly to each other and can be either a motor or a pump. A displacement of the hydraulic units is adjustable. The first hydraulic unit is connected to the engine, which can be combustion engine, electrical engine or the like. The second hydraulic unit is connected to the drive unit, which can be a gear box driving wheels.

When accelerating a machine from standstill, the engine drives the first hydraulic unit, which functions in this case as a hydraulic pump, while the second hydraulic unit functions as a hydraulic motor driving the drive unit. At first, the displacement of the hydraulic pump is small while the displacement of the hydraulic motor is large. With an increase in speed of the machine the displacement of the hydraulic pump is progressively increased while, the displacement of the hydraulic motor is progressively decreased, resulting in an increase of tractive power. This allows a steady engine speed while the vehicle is accelerating. A change in pump and motor displacement over time (time of traction power application) and traction power magnitude defines the machine acceleration.

To maintain the driving speed, the engine continues driving the first hydraulic unit, functioning as a hydraulic pump, which drives the second hydraulic unit functioning as a hydraulic motor propelling the drive unit.

To decelerate, the functions of the hydraulic units are switched. The drive unit powers the second hydraulic functioning as a pump. The pump powers the first hydraulic unit, functioning as a motor, driving the engine. To speed down or decelerate the machine, the hydraulic pump displacement is progressively decreased and the hydraulic motor displacement progressively increased. The time of pump and motor displacement change (time of breaking power application) and breaking power magnitude defines the machine deceleration.

A rapid change in increasing the hydraulic motor displacement and/or decreasing the hydraulic pump displacement causes a high breaking power, that exceeds the engine limits. If the engine is driven to fast by the hydrostatic transmission, a high negative power is applied to the engine, which causes the engine to overspeed.

Exceeding the engine limits increases the risk of engine failures.

The problem underlying this invention is to provide a deceleration arrangement complying with the engine limits.

This problem is solved with a hydrostatic transmission according to claim 1.

The set point is adaptable to the hydrostatic transmission, the hydraulic units and the machine parameters. Depending on this parameter, the control unit can adapt the displacement of the hydraulic unit in a sensitive manner.

The hydraulic unit commands are adaptable depending on the regulation factor and the machine speed, respective the engine speed or hydraulic unit speeds. This allows the control unit to control and adapt the displacement of the hydraulic units.

According to the operator commands, the control unit controls the engine, the hydraulic units, the displacement of the hydraulic units and other functions of the machine. The function of the hydraulic units, either as a hydraulic motor or as a hydraulic pump, is controlled by the operator's commands being processed by the control unit. As a result, the machine translates the operator's commands into machine actions.

The sensor outputs allow a surveillance and adjustment of the respective hydraulic units, the engine, the fluid connection etc. As a result, the displacement of the hydraulic units can be adjusted.

The data provided by the memory unit can comprise different information. For example, this information can comprise previous control events and mechanisms, set points or regulation factors, which can be used to improve the current control mechanism.

This allows that the displacement of the hydraulic pump and the hydraulic motor can be adapted in order to comply with the engine limits. Complying with the engine limits decreases the risk of engine failures. Further the wear of the engine is reduced and therefore the maintenance effort is low. Such a hydrostatic transmission can regulate the behavior of the machine propel system, improving both the propulsion and the breaking.

According to the invention, the hydrostatic transmission comprises a breaking power sensor and a traction power sensor, which are connected to the control unit.

The breaking power sensor and the traction power sensor provide sensor output which allows the control unit to control the displacement of the hydraulic units in sensitive manner. The control unit can compare the breaking power and the traction power and modulate the power transmitted to the engine based on this comparison by adjusting the displacement of the hydraulic units. This allows a power transfer, wherein the engine speed complies with the engine limits.

In an embodiment, the control unit comprises a control function in form of a PI-function.

The PI-function also known as proportional integral function allows an easy control of the displacements of the hydrostatic transmission. Further, the PI-function is easily adaptable to different situations, the hydrostatic transmission and the machine type.

In an embodiment, the displacement of the first hydraulic unit and the displacement of the second hydraulic unit are controlled independently from each other or simultaneously.

An independently controlled displacement of the hydraulic units reduces the controlling effort, since just one displacement of either hydraulic unit is adjusted at a time, resulting in good deceleration characteristics.

Alternatively, the displacements of the first and second hydraulic units are controlled simultaneously allowing a fast adaptation of the displacements.

In an embodiment, the memory unit contains structural characteristics of a machine comprising the hydrostatic transmission.

The structural characteristics comprise for example gear box ratios, wheel diameters, hydraulic unit parameters and sizes, engine parameters and sizes, etc. These allow an adaptation of the control function parameters in order to provide a machine adapted control of the hydraulic unit displacements.

Similarly, a method to control the characteristics of a hydrostatic transmission as described at the outset is disclosed, wherein the speed sensors and the sensor units are connected to the control unit, which controls a displacement of the hydraulic units based on a set point, a regulation factor, hydraulic unit commands, operator commands, information provided by the memory unit and sensor outputs.

This method does not belong to the invention;
The set point is set according to each machine and its characteristics. It allows a specific calibration of the control unit resulting in a machine-dependent control of the displacement of the hydraulic units.

The control unit can adapt the hydraulic unit commands according to the machine speed, respective the engine speed, and the regulation factor allowing to adapt the displacement of the hydraulic units.

Based on the operator's commands, the control unit controls and adjusts the displacement of the hydraulic units.

Taking the sensor output into account the control unit is able to control and adjust the displacement of the hydraulic units in a sensitive manner.

The control unit is able to determine and adjust the displacement of the hydraulic unit based on the input information complying with the engine limits. Staying within the engine limits reduces the risk of engine failures, compared to exceeding the engine limits. Besides reducing the risk of engine failures, wear is reduced resulting in a low maintenance effort.

The control unit controls the displacement of the hydraulic unit based on a breaking power sensor output and a traction power sensor output.

The control unit compares the breaking power sensor output and the traction power sensor output to improve the deceleration behavior of the machine. Further, the output helps the control unit to comply with the engine limits by adapting the displacement of the hydraulic units decreasing the risk of engine overloads.

In an embodiment, the control unit uses a control function in form of a PI-function. The PI-function, also known as proportional integral function, allows the control unit to control and adapt the displacement of the hydraulic units easily and is adaptable to different machines, machine types, hydrostatic transmissions etc.

In an embodiment, the control unit controls the displacement of the first hydraulic unit and the displacement of the second hydraulic unit independently from each other or simultaneously.

Controlling the displacement independently requires little controlling power, since only one displacement is adapted at a time, while the other displacement stays same.

Alternatively, controlling the displacement simultaneously results in a fast adaptation of the displacements. The displacement of the first hydraulic unit and the displacement of the second hydraulic unit can be increased or decreased simultaneously or the displacement of one hydraulic unit can be increased while the displacement of the respective other can be decreased. The speed of change in displacement of one hydraulic unit can be adjusted independently from the respective other hydraulic unit.

In an embodiment, the method predetermines the displacement of each hydraulic unit.

Predetermining the displacement of the hydraulic units allows a quick reaction, since a control loop is omitted. Thus, the deceleration of the machine is improved, while the deceleration complies with the engine limits.

The invention will now be described in more detail with reference to the drawings wherein:

Fig. 1    shows schematic view of a prior art hydrostatic transmission;

Fig. 2    shows a hydrostatic transmission in combination with its sensor arrangement and its control unit;

Fig. 3    shows a flow chart of a control process.

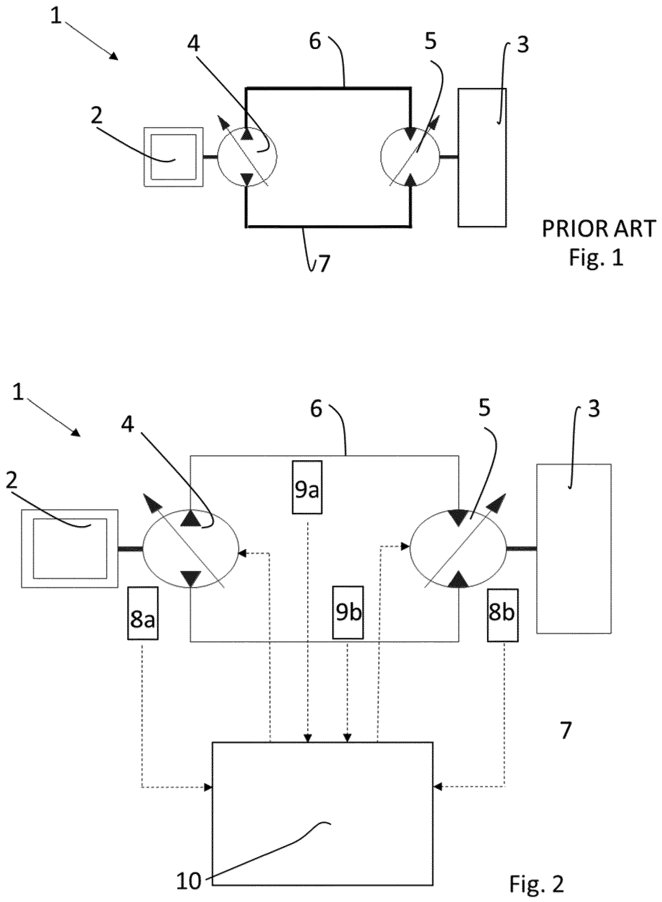

Fig. 1 depicts a hydrostatic transmission 1 as known from prior art as used in machines and operated by a not depicted operator. The hydrostatic transmission 1 comprises an engine 2, a drive unit 3, a first hydraulic unit 4 and a second hydraulic unit 5, wherein the first and the second hydraulic units 4, 5 are connected fluidly through a first fluid connection 6 and a second fluid connection 7. The engine 2 is connected to the first hydraulic unit 4 and the drive unit 3 is connected to the second hydraulic unit 5. Further the engine 2 comprises a not depicted speed sensor. The hydraulic units 4, 5 are adaptable in their displacement and can function as a hydraulic pump (pump) or a hydraulic motor (motor).

However, either the first hydraulic unit 4 is a pump and the second hydraulic unit 5 is a motor, or the first hydraulic unit 4 is a motor and the second hydraulic unit 5 is a pump.

Fig. 2 depicts the hydrostatic transmission 1 according to the present invention comprising an engine 2, a drive unit 3, a first and second hydraulic unit 4, 5 and a first and a second fluid connection 6, 7. The first hydraulic unit 4 comprises a first sensor unit 8a, and the second hydraulic unit 5 comprises a second sensor unit 8b. The first fluid connection 6 comprises a first fluid connection sensor unit 9a and the second fluid connection comprises a second fluid sensor unit 9b. The sensor units 8a, 8b and the fluid connection sensor units 9a, 9b are connected to a control unit 10, which is connected to the first and second hydraulic units 4, 5, controlling the displacement of the hydraulic units 4, 5. Further, the control unit 10 comprises a not depicted memory unit.

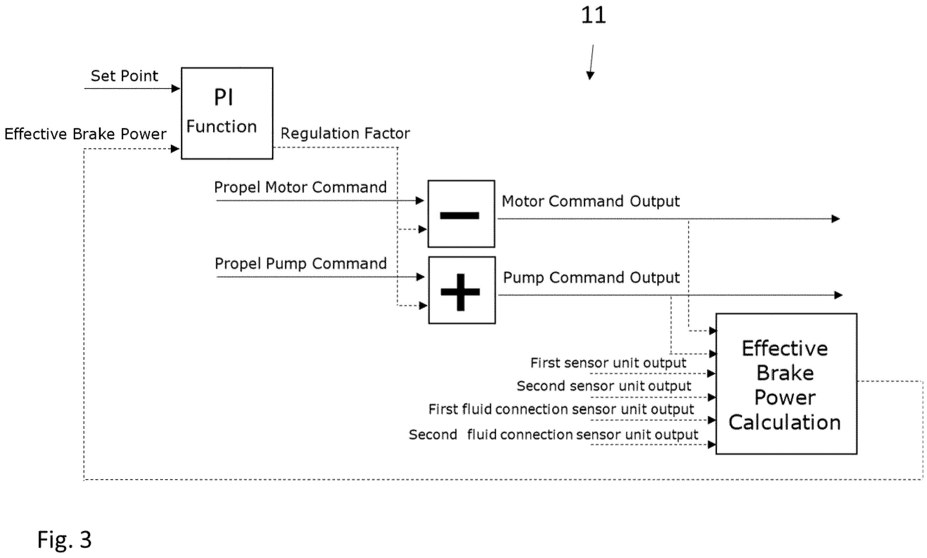

Fig. 3 depicts a schematic flow chart of a control process 11 which is performed by the control unit 10 to control the hydraulic units 4, 5. The control process 11 is based on a PI-function, also known as proportional integral function. This PI-function takes a set point and an effective break power into account. The set point is a predetermined parameter based on the hydraulic transmission characteristics.

Based on the PI-function, a regulation factor and propel hydraulic unit commands, the control unit 10 controls the displacements of the hydraulic units 4, 5. The control unit outputs hydraulic unit output commands and transfers them to each respective hydraulic unit 4, 5.

The hydraulic unit output commands affect the Effective Break Power. The Effective Break Power is calculated based on the hydraulic unit output commands, the outputs of the sensor units 8a, 8b, the outputs of the fluid connection sensor unit 9a, 9b and/or the engine speed. The Effective Break Power is transferred to the PI-function to adjust the hydraulic unit output commands.

The sensor units 8a, 8b can detect speed, torque and/or mechanical energy. The fluid connection sensor units 9a,

EP 4 001 697 B1

9b are able to detect flow, pressure and/or respective hydraulic energy.

In an acceleration process of the machine, the engine 2 provides a mechanical power, which is transferred to the first hydraulic unit 4. In this case the first hydraulic unit 4 functions as a hydraulic pump, which transfers the mechanical power provided by the engine 2 into hydraulic power. This hydraulic power is transferred through the fluid connections 5, 6 from the pump to the second hydraulic unit 5, which functions as motor. The second hydraulic unit 5 respective motor transfers the hydraulic power into mechanical power and passes the mechanical power to the drive unit 3. The drive unit 3 can be a gear box in combination with axles and wheels driving the machine.

In order to accelerate the machine, the displacement of the pump is progressively increased while the displacement of the motor is progressively decreased. This allows the machine to accelerate without increasing the engine speed. The displacement of the pump and motor can be adjusted according to the operator's commands.

A change in pump and motor displacement over time (time of traction power application) and traction power magnitude defines the machine acceleration. The traction power can be determined by the control unit 10 using outputs of the sensor units 8a, 8b and the fluid connection sensor unit 9a, 9b.

In the following a decelerating process is described, which is the basis for the subject-matter of this invention.

In a deceleration process of the machine, the drive unit 3 powers the second hydraulic unit 5, which functions as a pump. The pump transfers the mechanical power supplied by the drive unit 3 into hydraulic power which is provided to the first hydraulic unit 4, which functions as a motor. The motor transfers the hydraulic power into mechanical power driving the engine 2. The engine 2 can be used as a drag decelerating the machine.

In a conventional decelerating process, the displacement of the pump is progressively decreased, while the displacement of the motor is progressively increased. To decelerate the machine fast, the displacement of the pump can be increased rapidly, while the displacement of the motor can be decreased rapidly as well, resulting in a high engine speed, potentially too high, exceeding the engine limits. The required energy to increase the engine speed is transferred from the drive unit 3, for example wheels or the like, through the hydrostatic transmission 1 to the engine 2.

In such a conventional deceleration process, the displacements of the pump and motor are adjusted only based on the engine speed. In order to decrease the engine speed in accordance to the engine limits, the displacements of the pump and the motor are adjusted, resulting in a low deceleration performance. To increase the deceleration performance, the pump displacement is adjusted increased and the motor displacement is increased resulting in a high engine speed, as described above. To reduce the engine speed, the displacement of the pump is decreased, and the displacement of the motor increased. This results in a control circuit until the machine reaches a desired speed. The engine 3 functions as a drag element.

The present application avoids this engine failure risk by being able to adjust the displacement of the pump and/or the displacement of the motor based on energies determined by the different sensor 8a, 8b, 9a, 9b. The sensor units 8a, 8b allow a determination of the mechanical energies provided by the engine 2 or the drive unit 3.

This allows to determine the displacement of each hydraulic unit 4, 5 in advance, independently from an operator's command. Skipping a first back coupling of the control circuit decreases the time to decelerate the machine, while increasing the deceleration performance. This process is described closer in the following.

In order to keep the engine 2 within its limits, the drag is controlled by the control unit 10 via controlling the displacement of the first and second hydraulic units 4, 5 respective the pump and the motor. The displacement of the first hydraulic unit and the displacement of the second hydraulic unit 5 can be controlled independently or simultaneously according to a preferred performance of the machine respective the operator.

A time of pump and motor displacement change (time of breaking power application) and breaking power magnitude defines the machine deceleration. The breaking power can be determined by the control unit 10 using outputs of the sensor units 8 and the fluid connection sensor unit 9.

Based on the breaking power and the above described traction power, the control unit 10 determines the Effective Breaking Power as described in the following formula:

$$Effecitve\ Breaking\ Power = Breaking\ Power - Traction\ Power$$

When the Effective Breaking Power is negative the machine is in an acceleration phase or at constant speed. In this case the control process 11 is deactivated.

When the Effective Breaking Power is positive, the machine is in a deceleration phase and the control process 11 is activated. The control unit 10 and the control process 11 decreases the motor displacement and/or increases the pump displacement, in order to decrease the breaking power. This effect is bidirectional, since it can increase the traction power as well.

As described above, the PI-function takes the Effective Breaking Power and the set point into account. Within the control process 11 the Effective Breaking Power is compared to the set point.

The memory unit provides information for example the set point, regulation factor, machine characteristics like

5

gear ratios, wheel diameters, engine limits and size, hydraulic unit parameters etc. Each information can be adapted to a respective machine and its elements in order to adopt the control process parameters.

The control process 11 uses the regulation factor to decrease the motor displacement and/or increase the pump displacement to achieve a breakeven point with the breaking power at the set value. The regulation factor can be applied to the motor only or to the motor and then to the pump. If the regulation factor is applied to the motor and the pump, the control process begins to reduce the motor displacement, and as soon as it reaches its minimum value it begins to increase the pump displacement. Further, the maximum of the regulation factor can be limited by the PI-function by limiting the displacement actuation range of hydraulic unit 4, 5 respective the motor and/or the pump.

This control process 11 prevents engine 2 overloads, since it is a predictive process, which can be defined in advance to possible deceleration phases. This helps to anticipate and avoid effects, like engine overloads, instead of reacting against it. The engine 2 speed can be limited using this control process 11, which prevents the engine 2 exceeding its speed or RPM limits. Further, the average engine speed is reduced during a deceleration process.

The control process 11 is able to calculate the breaking power magnitude, providing a reaction according to the effect. The control process 11 can analyze the situation and elements of influence in real time, due to the numerous sensor units, the control unit 10 is able to determine energies (mechanical energy and hydraulic energy) besides speeds, flows, pressure etc. resulting in an universal use. Further, the control process 11 can be adapted to any machine or vehicle having such a hydrostatic transmission.

When a machine or vehicle, having the hydrostatic transmission according to the invention, moves along a slope downhill, the downhill force accelerates the machine. The downhill force, also traction power, applied time and movement resistant (e.g. rolling friction) defines the machine acceleration. The traction power can be determined based on outputs of the sensor units 8a, 8b, 9a, 9b by the controlling unit 10.

The control unit 10 surveils the driving status of the vehicle and determines based on its inputs, e.g. the sensor unit (8a, 8b, 9a, 9b) outputs, a proper deceleration process in case the operator commands the machine to slow down.

The control unit 10 determines the deceleration process based on the above described control process 11 in form of the PI-function. The PI-function takes the set-point and the Effective Break Power into account. In combination with the regulation factor and the hydraulic unit 4, 5 commands, the displacements of the hydraulic units 4,5 respective the pump and the motor are adjusted.

Adjusting the displacement of the pump and the motor changes the driving status, which creates new inputs to the control unit 10. Based on these new inputs, the control unit determines the effective breaking power, which lead to a new calculation based on the PI-function within the control process 11.

While the vehicle's inertia is high, e.g. at the beginning of the deceleration phase, the deceleration of the vehicle is smooth, avoiding exceeding the engine 2 limits. As soon as the vehicle's inertia is reduced, the arrangement and method provided by this invention allow a fast deceleration, resulting in an improved drag control, a reduced breaking power and breaking time, and avoiding engine overspeed.

Reference number list

1     hydrostatic transmission
2     engine
3     drive unit
4     first hydraulic unit
5     second hydraulic unit
6     first fluid connection
7     second fluid connection
8     sensor unit
9     fluid connection sensor unit
10    control unit
11    control process

**Claims**

1. Hydrostatic transmission (1) having an engine (2), a first hydraulic unit (4), a second hydraulic unit (5) and a drive unit (3), which are connected to a control unit (10) having a memory unit, wherein

   the engine (2) comprises a first speed sensor and is connected to the first hydraulic unit (4), wherein the drive unit (3) is connected to the second hydraulic unit (5), wherein the first hydraulic unit (4) is a pump and the second hydraulic unit (5) is a motor or the first hydraulic unit (4) is a motor and the second hydraulic unit (5) is a pump, wherein

each hydraulic unit comprises a sensor unit (8) having a speed sensor, wherein

the first and the second hydraulic units (4, 5) are connected fluidly through a first fluid connection (6) and a second fluid connection (7), wherein the first fluid connection (6) comprises a first fluid connection sensor unit (9) and the second fluid connection (7) comprises a second fluid connection sensor unit (9),

**characterized in that** the hydrostatic transmission (1) comprises a breaking power sensor and a traction power sensor, which are connected to the control unit (10), wherein the speed sensors and the sensor units (8, 9) are connected to the control unit (10), which controls a displacement of the hydraulic units (4, 5) based on a set point, a modulation command, hydraulic unit commands, operator commands, information provided by the memory unit and sensor outputs.

2. Hydrostatic transmission (1) according to claim 1, **characterized in that** the control unit (10) comprises a control function in form of a PI-function.

3. Hydrostatic transmission (1) according to claim 1 or 2, **characterized in that** the displacement of the first hydraulic unit (4) and the displacement of the second hydraulic unit (5) are controlled independently from each other.

4. Hydrostatic transmission (1) according to any of claims 1 to 3, **characterized in that** the memory unit contains structural characteristics information of a machine comprising the hydrostatic transmission (1).

## Patentansprüche

1. Hydrostatisches Getriebe (1), das eine Kraftmaschine (2), eine erste Hydraulikeinheit (4), eine zweite Hydraulikeinheit (5) und eine Antriebseinheit (3) aufweist, die mit einer Steuereinheit (10) verbunden sind, die eine Speichereinheit aufweist, wobei

die Kraftmaschine (2) einen ersten Drehzahlsensor umfasst und mit der ersten Hydraulikeinheit (4) verbunden ist, wobei die Antriebseinheit (3) mit der zweiten Hydraulikeinheit (5) verbunden ist, wobei die erste Hydraulikeinheit (4) eine Pumpe ist und die zweite Hydraulikeinheit (5) ein Motor ist oder die erste Hydraulikeinheit (4) ein Motor ist und die zweite Hydraulikeinheit (5) eine Pumpe ist, wobei jede Hydraulikeinheit eine Sensoreinheit (8) umfasst, die einen Drehzahlsensor aufweist, wobei

die erste und die zweite Hydraulikeinheit (4, 5) durch eine erste Fluidverbindung (6) und eine zweite Fluidverbindung (7) fluidverbunden sind, wobei die erste Fluidverbindung (6) eine erste Fluidverbindungssensoreinheit (9) umfasst und die zweite Fluidverbindung (7) eine zweite Fluidverbindungssensoreinheit (9) umfasst,

**dadurch gekennzeichnet, dass** das hydrostatische Getriebe (1) einen Bremsleistungssensor und einen Traktionsleistungssensor umfasst, die mit der Steuereinheit (10) verbunden sind, wobei die Drehzahlsensoren und die Sensoreinheiten (8, 9) mit der Steuereinheit (10) verbunden sind, die eine Verstellung der Hydraulikeinheiten (4, 5) basierend auf einem Sollwert, einem Modulationsbefehl, Hydraulikeinheitsbefehlen, Bedienerbefehlen, von der Speichereinheit bereitgestellten Informationen und Sensorausgaben steuert.

2. Hydrostatisches Getriebe (1) nach Anspruch 1, **dadurch gekennzeichnet, dass** die Steuereinheit (10) eine Steuerfunktion in Form einer PI-Funktion umfasst.

3. Hydrostatisches Getriebe (1) nach Anspruch 1 oder 2, **dadurch gekennzeichnet, dass** die Verstellung der ersten Hydraulikeinheit (4) und die Verstellung der zweiten Hydraulikeinheit (5) unabhängig voneinander gesteuert sind.

4. Hydrostatisches Getriebe (1) nach einem der Ansprüche 1 bis 3, **dadurch gekennzeichnet, dass** die Speichereinheit Struktureigenschaftsinformationen einer das hydrostatische Getriebe (1) umfassenden Maschine enthält.

## Revendications

1. Transmission hydrostatique (1) comprenant un moteur (2), une première unité hydraulique (4), une seconde unité hydraulique (5) et une unité d'entraînement (3), qui sont reliés à une unité de commande (10) ayant une unité de mémoire,

le moteur (2) comprenant un premier capteur de vitesse et étant relié à la première unité hydraulique (4), l'unité d'entraînement (3) étant reliée à la seconde unité hydraulique (5), la première unité hydraulique (4) étant une pompe et la seconde unité hydraulique (5) étant un moteur ou la première unité hydraulique (4) étant un moteur et la seconde unité hydraulique (5) étant une pompe,

chaque unité hydraulique comprenant une unité de détection (8) ayant un capteur de vitesse,

les première et seconde unités hydrauliques (4, 5) étant en communication fluidique par l'intermédiaire d'une première liaison fluidique (6) et d'une seconde liaison fluidique (7), la première liaison fluidique (6) comprenant une première unité de détection de liaison fluidique (9) et la seconde liaison fluidique (7) comprenant une seconde unité de détection de liaison fluidique (9).

**caractérisée en ce que** la transmission hydrostatique (1) comprend un capteur de puissance de coupure et un capteur de puissance de traction qui sont reliés à l'unité de commande (10), les capteurs de vitesse et les unités de détection (8, 9) étant reliés à l'unité de commande (10), qui commande un débit volumétrique des unités hydrauliques (4, 5) en fonction d'un point de consigne, d'une instruction de modulation, d'instructions d'unité hydraulique, d'instructions d'opérateur, d'informations fournies par l'unité de mémoire et de sorties de capteur.

2. Transmission hydrostatique (1) selon la revendication 1, **caractérisée en ce que** l'unité de commande (10) comprend une fonction de commande sous la forme d'une fonction PI.

3. Transmission hydrostatique (1) selon la revendication 1 ou 2, **caractérisée en ce que** le débit volumétrique de la première unité hydraulique (4) et le débit volumétrique de la seconde unité hydraulique (5) sont commandés indépendamment l'un de l'autre.

4. Transmission hydrostatique (1) selon l'une quelconque des revendications 1 à 3, **caractérisée en ce que** l'unité de mémoire contient des informations de caractéristiques structurelles d'une machine comprenant la transmission hydrostatique (1).

PRIOR ART
Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3623664 A1
- EP 1433648 A2
- US 8491444 B1
- US 20100083652 A2
- DE 102016205891 A1